# EUROPEAN PATENT APPLICATION

(11) **EP 0 968 686 A1**
(43) Date of publication of application: **05.01.2000**
(21) Application number: 98305184.8
(22) Date of filing: 30.06.1998
(51) Int. Cl.: A61C 17/34, A61C 17/26

(54) **Electric toothbrush**

(71) Applicant: Wing Shing Products (BVI) Co. Ltd., Road Town, Tortola (VG)
(72) Inventor: Wing Shing Products (BVI) Co. Ltd., Road Town, Tortola (VG)
(74) Representative: Woodward, John Calvin

(57) **Abstract**

An electric toothbrush is disclosed which includes an elongate body (12) defining a handle, an elongate housing (16) extending from the body and supporting a brush head (18) at a distal end thereof, a drive shaft rotatably mounted within the housing and connected to the brush head, a motor (26) disposed within the body and including a rotating output shaft (28), and a transmission assembly (30) adapted to convert the rotational movement of the output shaft into reciprocating axial rotation of the drive shaft and brush head about a common axis of rotation.

## Description

This invention relates to a dental hygiene appliance, and more particularly, to a powered toothbrush having an axially reciprocating brush head driven by an electric motor.

Electrically powered toothbrushes are well known in the art. In the past, they have been provided with one or more brush heads that either rotate, oscillate, vibrate or reciprocate about a particular axis of motion depending upon the configuration of their drive mechanism to remove dental plaque thoroughly and quickly. For example, US patent No. 5311633 discloses a power driven toothbrush which includes a brush head mounted to oscillate within an angular sector of rotation. The brush head is driven by a rotating drive shaft connected to a four-bar linkage. The linkage includes a crank and a rocker and the axis of rotation of the brush head is perpendicular to the axis of rotation of the drive shaft. A bevel gear assembly disposed adjacent the brush head translates the motion of the drive shaft to the brush head.

Another example of an electric toothbrush is disclosed in US patent No. 5383242 which includes a motorized drive mechanism consisting of a piston with a lifting cam configured to cause the reciprocating motion of a toothed rack and corresponding rotation of a brush head about an axis perpendicular to the motion of the toothed rack. In the drive assemblies of both of these prior art devices, a great deal of friction is generated by surface-to-surface contact rotation components. This friction produces significant power losses and results in low operating efficiencies. To avoid such power losses, the toothbrush of the subject invention is advantageously constructed so that the brush head rotates about the same axis as the drive shaft. Moreover, the subject invention provides a drive assembly with fewer components than prior art toothbrush drive assemblies so that there are fewer surface-to-surface contact points, thereby reducing frictional losses.

The subject invention is directed to an electric toothbrush for thoroughly and quickly removing dental plaque and debris from and between the teeth and gums. The preferred toothbrush comprises an elongate body defining a handle and having an interior cavity formed therein. An elongate brush support housing extends from a front end of the body and supports a brush head at a distal end thereof. An elongate drive shaft is rotatably supported within the elongate housing and is connected to the brush head. An electric motor is disposed within the interior cavity of the body and it includes a rotating output shaft. The toothbrush further includes a transmission assembly which is disposed within a transmission housing situated in the interior cavity of the body. The transmission assembly is adapted to convert the rotational movement of the output shaft into reciprocating axial rotation of the drive shaft and brush head about a common axis of rotation.

The transmission assembly includes a crank which is operatively connected to the output shaft of the motor and a rocker arm which is operatively connected to the drive shaft disposed in the elongate housing. The crank has a transverse slider projecting from one end thereof and the rocker has an elongate slot formed therein. The transmission assembly further comprises a gear train which includes a driving gear mounted on the output shaft of the motor and a driven gear mounted to the crank. Rotation of the driven gear causes corresponding pendulum-like reciprocating motion of the rocker arm as the slider translates within the slot formed in the rocker arm. A rocker shaft extends from the rocker arm to the drive shaft so that the reciprocating motion of the rocker arm is translated to the brush head.

The electric toothbrush of the subject invention further includes a rechargeable battery system which is disposed within the interior cavity of the body for energizing the electric motor. The battery is preferably charged when the toothbrush is positioned on a base structure which is connected to a source of electrical power.

In a preferred embodiment of the subject invention, the elongate brush support housing is detachably mounted to the front end of the elongate body and the drive shaft is disengageable from the rocker shaft. Preferably, the distal end portion of the elongate brush support housing includes a shroud which is dimensioned and configured to partially enclose the brush head. It is envisioned that the shroud and the brush head can have a variety of complementary geometric configurations, and that a plurality of interchangeable support housings can be provided in a set for use with a single toothbrush body.

The invention will now be described, by way of example only, with reference to the accompanying drawings, in which:
Figure 1 is a perspective view of an electric toothbrush constructed in accordance with a preferred embodiment of the subject invention;
Figure 2 is an exploded perspective view of the electric toothbrush shown in Figure 1 with the components thereof separated for ease of illustration;
Figure 3 is a side elevation view in partial cross section of the electric toothbrush of

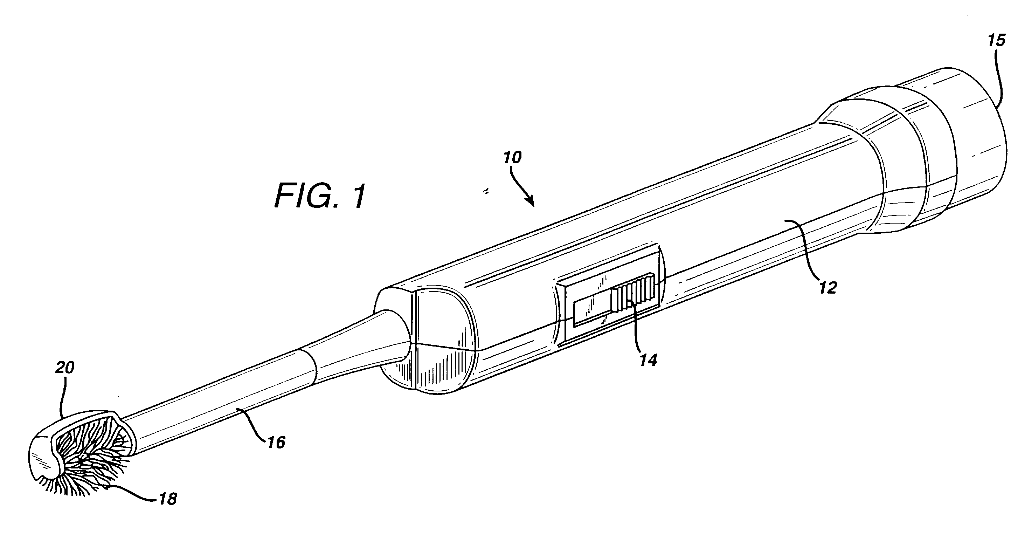

Figure 1 illustrating the internal components of the toothbrush housed within the handle portion;

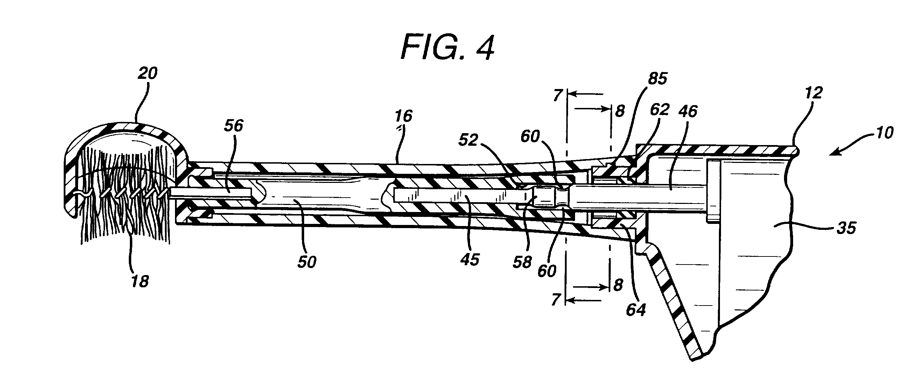

Figure 4 is an enlarged side elevational view in cross section of the detachable brush support housing of the electric toothbrush of Figure 1;

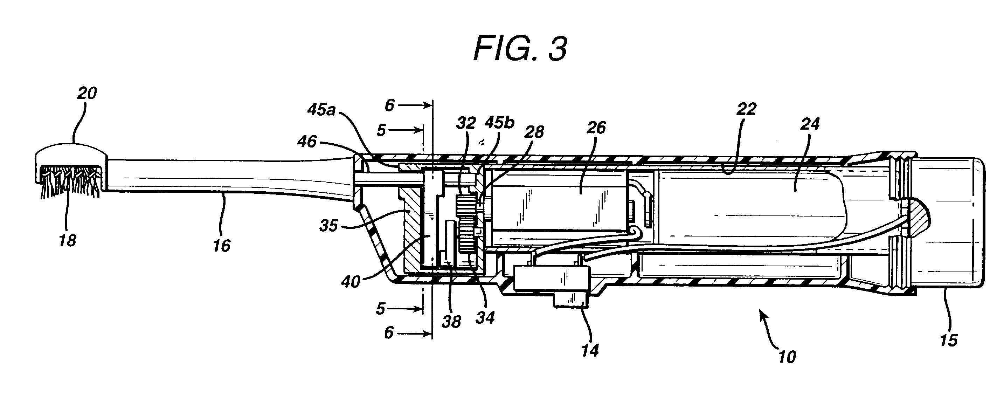

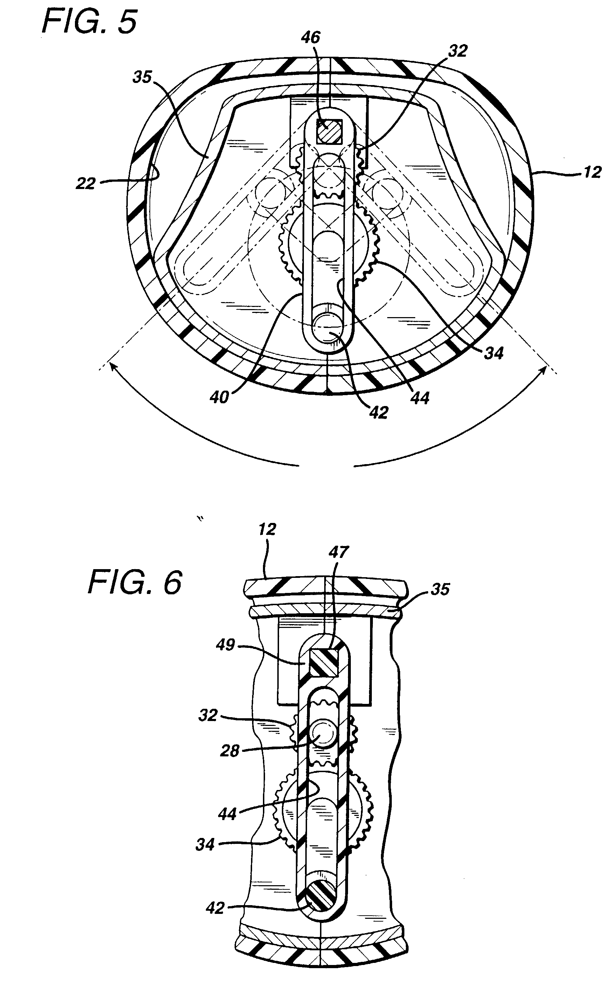

Figure 5 is a cross sectional view taken along line 5-5 of Figure 3 illustrating the range of motion of the components of the transmission assembly housed within the handle portion of the electric toothbrush of the subject invention;
Figure 6 is a cross sectional view taken along line 6-6 of Figure 3 illustrating the orientation of the components of the transmission assembly in a rest position;

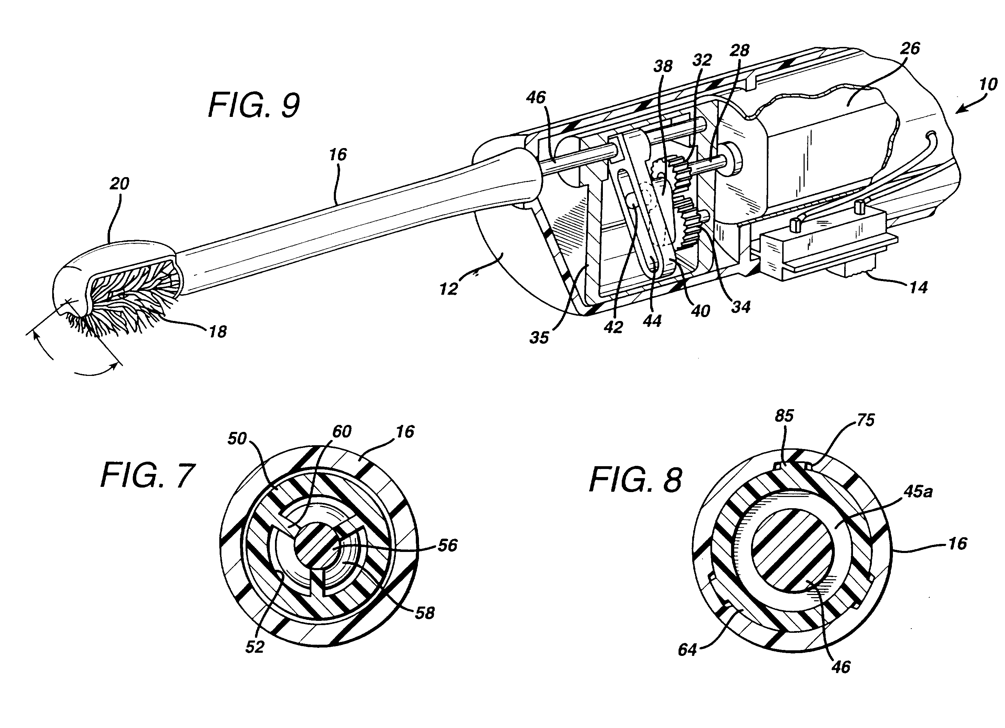

Figure 7 is a cross sectional view taken along line 7-7 of Figure 4 illustrating the coupling engagement of the rocker shaft and the brush head drive shaft;
Figure 8 is a cross sectional view taken along line 8-8 of Figure 4 illustrating the orientation of the connective engagement between the proximal end portion of the detachable brush support housing of the handle portion of the toothbrush;
Figure 9 is a perspective view in partial cross section of the electric toothbrush of the subject invention illustrating the relationship between internal components of the toothbrush housed within the handle portion; and

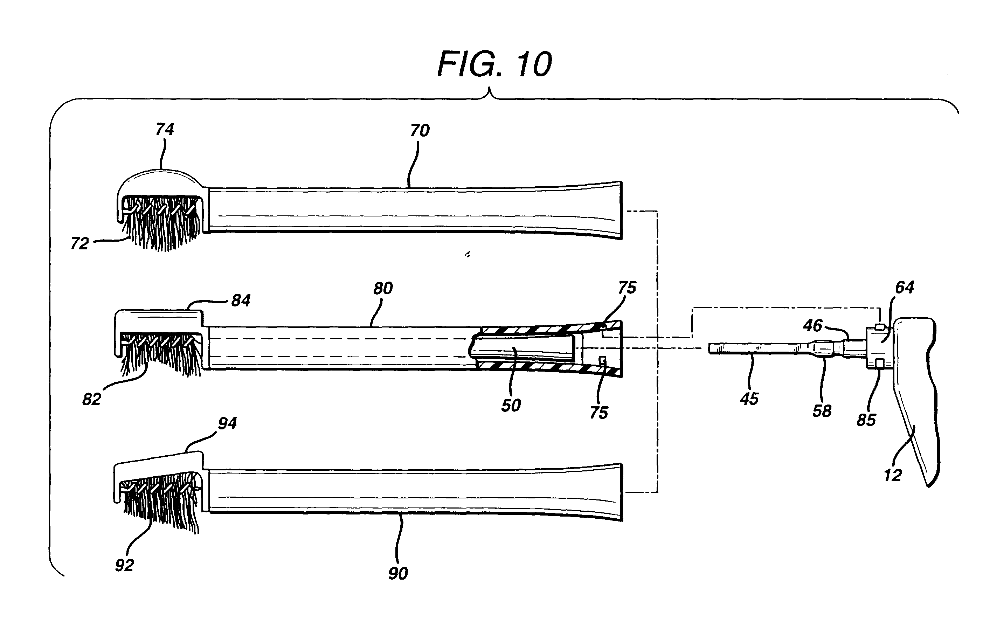

Figure 10 illustrates three different brush support housings adapted for detachable engagement with the handle portion of the electric toothbrush of the subject invention.

Referring now to the drawings wherein like reference numerals identify similar structural elements of the subject invention, there is illustrated in Figure 1 an electric toothbrush constructed in accordance with a preferred embodiment of the subject invention and designed generally by reference numeral 10.

Referring to Figure 1, the electric toothbrush 10 of the subject invention includes an elongated body portion 12 defining an ergonomic handle for convenient manipulation by a user. Body portion 12 is adapted to be supported in an upright orientation on a base structure (not shown). The base structure will be connected to a source of electrical power"and will serve as a source of power for the toothbrush which preferably includes a rechargeable battery system. Such systems are well known to those having ordinary skill in the art. A conventional slidable power switch 14 is provided on body portion 12 for controlling the operation of toothbrush 10, and an electrically conductive end cap 15 is threadably connected to the rear end of body portion 12 to transfer electrical energy from the base to the rechargeable battery disposed within the body portion when the toothbrush is charging.

An elongated brush support housing 16 extends from the front end of body portion 12 for supporting the brush head 18 of toothbrush 10. Brush head 18 is preferably formed by an elongated strand of metal having a multiplicity of radially outwardly projecting bristles disposed along its length that is twisted about its longitudinal axis to form a brush with a multiplicity of individually standing bristles with a central spine. The resulting configuration of the cleaning bristles effectively remove plaque and debris from the gaps and spaces located between teeth. A shroud 20 which may be formed integral with brush support housing 16 encloses a portion of brush head 18. The shroud tends to prevent toothpaste from spraying away from the area of the mouth which is being cleaned, and also serves to protect the area of cheek and gum not intended to be contacted by the moving brush head.

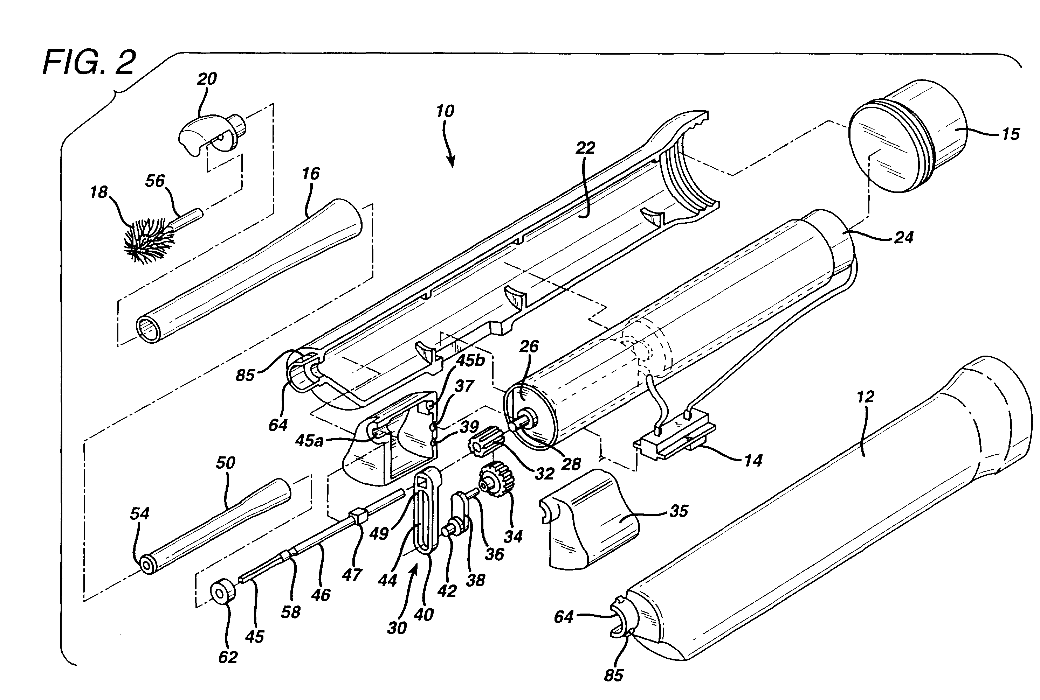

Referring to Figures 2 and 3, body portion 12 defines an elongated interior cavity 22 for supporting the various mechanical and electrical components which drive powered toothbrush 10. In particular, a rechargeable battery 24 is disposed within cavity 22 adjacent the rear end thereof and an electric motor 26 is disposed in front of the battery. As illustrated, both the battery and the motor are preferably encased by a thin layer of insulation (i.e. a plastic wrap). The rechargeable battery may be a nickel-cadmium type battery or the like. The motor is preferably a conventional DC motor having an armature. Conductive wires connect battery 24 and motor 26 to the power switch 14 located on the exterior of body portion 12 so that energy stored within the rechargeable battery can be selectively delivered to the motor by the user.

With continuing reference to Figures 2 and 3, in conjunction with Figure 9, power from electric motor 26 is transferred from output shaft 28 to brush head 18 through a transmission assembly 30 which is supported within a transmission housing 35 disposed in the interior cavity 22 of the body portion 12 adjacent the front end thereof. Transmission housing 35 essentially defines a sturdy support structure to maintain the various rotating components of the transmission assembly in proper alignment with respect to one another.

As best seen in Figure 9, transmission assembly 30 includes a gear train and a linkage sub-assembly. the gear grain consists of a drive gear 32 mounted on the rotating output shaft 28 of electric motor 26 and a driven gear 34 mounted on a rotatable crank shaft 36. An upper journal port 37 is formed in the rear wall of transmission housing 35 to provide a bearing surface for output shaft 28, and a lower journal port 39 is formed in the rear wall of housing 35 to provide a bearing surface for crank shaft 36. The linkage sub-assembly consists of a crank 38 and a rocker arm 40. One end of crank 38 is mounted to crank shaft 36 so that it rotates therewith as gear 34 is driven by gear 32. The other end of crank 38 includes a slide pin 42 which is dimensioned and configured to engage and translate within an elongated slot 44 defined within rocker arm 40. Rocker arm 40 is mounted to an elongate rocker shaft 46 which is supported for rotation within front and rear rocker journals 45a and 45b formed in transmission housing 35. As best seen in Figure 6, the connection between rocker arm 40 and rocker shaft 46 is facilitated by the engagement of rectangular locking block 47 within complementary aperture 49.

As illustrated in Figure 5, in use, because the range of travel allotted to slide pin 42 within slot 44 is limited, continuous rotation of crank 38 within a 360° cycle causes corresponding reciprocating pendulum-like motion of rocker arm 40 within an angular section of rotation of about 80° in a geometric plane which is perpendicular to the longitudinal axis of the rocker shaft. This pendulum-like motion is transferred directly to rocker shaft 46, which, in turn, is transferred to brush head 18 through an elongated brush shaft coupling 50 illustrated in Figure 4.

Referring to Figure 4, brush shaft coupling 50 is supported within brush support housing 16 and is mounted to rotate therein about its longitudinal axis. An axial bore 52 extends partially through the rear end portion of shaft coupling 50 to accommodate rocker shaft 46. As best seen in Figure 7, rocker shaft 46 is detachably supported within axial bore 52. The radial fingers serve to releasably engage a portion of the enlarged segment 58, securely retaining rocker shaft 46 so that the reciprocating motion of rocker arm 40 is directly transferred to brush shaft 56. The front end portion of shaft coupling 50 includes an axial bore 54 which extends partially therethrough to fixedly retain the brush head shaft 56. An annular bushing 62 is retained in the flanged mounting area 64 defined at the front end of body portion 12 to rotatably support rocker shaft 40 as it rotates.

Referring now to Figure 10, there is illustrated three interchangeable brush support housings 70,80 and 90 each having a particular brush head and shroud configuration, and each adapted to be detachably engaged to the flanged mounting area 64 at front end of the body portion 12 of powered toothbrush 10. Support housing 70 includes a generally spherical brush head 72 and a complementary hemi-spherical shroud 74 partially enclosing brush head 72. Support housing 80 includes a cylindrical brush head 82 with a radial concavity similar to brush head 18 and a complementary rectangular shroud 84 which partially encloses brush head 82. Support housing 90 contains a rearwardly tapered brush head 92 and a complementary rearwardly tapered shroud 94 which partially encloses brush head 92.

As best seen in Figure 8, the proximal end of each of the brush support housings illustrated in Figure 10, as well as the brush support housing 16 discussed hereinabove, includes a plurality of spaced circumferentially apart engagement notches 75 formed within the interior bores thereof for receiving complementary engagement tabs 85 which project radially outwardly from the flanged mounting area 64 formed at the front end of body portion 12.

## Claims

1. An electric toothbrush comprising:
a) an elongate body defining a handle (12) and having an interior cavity formed therein;
b) an elongate housing (16) extending from a front end of the elongate body and supporting a brush head (18) at a distal end thereof;
c) an elongate drive shaft (46) mounted for axial rotation within the elongate housing and connected to the brush head;
d) an electric motor disposed within the interior cavity of the body and including a rotating output shaft; characterised by
e) a transmission assembly (30) disposed within the interior cavity of the elongate body and including a crank arm (38), a follower (42) attached to said crank arm, and a rocker arm (40) having an elongate slot (44), said crank arm being operatively connected to said output shaft (46), said follower disposed in said elongate slot of said rocker arm, and said rocker arm being connected to said drive shaft, said transmission assembly converting rotational movement from said out shaft via said crank arm, follower, and rocker arm into reciprocating movement for said drive shaft and brush head about an axis of rotation shared commonly between them, and wherein said rocker arm has a reciprocating pendulum motion within an angular sector of rotation of approximately 80°.

2. An electric toothbrush comprising:
a) an elongate body defining a handle (12) and having an interior cavity formed therein;
b) an elongate housing detachably mounted to a front end of the elongate body and supporting a brush head (18) at a distal end thereof;
c) an elongate drive shaft (46) mounted to rotate about a longitudinal axis within the elongate housing and connected to the brush head;
d) an electric motor disposed within the interior cavity of the elongate body and including a rotating output shaft; characterised by
e) a transmission assembly (30) disposed within the interior cavity of the elongate body and adapted to convert rotational movement of the output shaft into reciprocating movement of the brush head about the axis of the drive shaft, the transmission assembly including a crank (38) which is operatively connected to the output shaft (46) and a rocker (40) which is operatively connected to the drive shaft, the crank having a transverse slider (42) projecting therefrom and the rocker having an elongate slot (44) formed therein, the slot accommodating relative movement of the slider as the crank is rotated by the output shaft, said transmission assembly further comprising an elongate rocker shaft extending from the rocker and configured to detachably engage the drive shaft, and further comprising a radial enlargement formed on the rocker shaft for detachably engaging a plurality of radial projections provided within a bore formed in the drive shaft.

3. An electric toothbrush comprising:
a) an elongate body defining a handle (12) and having an interior cavity formed therein;
b) an elongate housing "extending from a front end of the body, a distal end portion of the housing including a shroud (20) which is dimensioned and configured to partially enclose a brush head (18) disposed within the shroud and mounted for reciprocating axial rotation therein;
c) an elongate drive shaft (46) rotatably supported within the elongate housing and connected to the brush head (18);
d) an electric motor disposed within the interior cavity of the body and including a rotating output shaft; characterised by
e) a transmission assembly (30) adapted to convert rotational movement of the output shaft (46) into reciprocating rotation of the drive shaft and brush head (18) about a common axis, said transmission assembly further comprising a crank (38) which is operatively connected to the output shaft (46) and a rocker (40) which is operatively connected to the drive shaft, the crank having a transverse slider (42) projecting therefrom and the rocker having an elongate slot (44) formed therein, the slot accommodating relative movement of the slider as the cranks is rotated by the output shaft, and said transmission assembly further comprising an elongate rocker shaft extending from the rocker and detachably mounted to the drive shaft.

4. An electric toothbrush as claimed in claim 3 characterised in that the elongate housing is detachably mounted to the elongate body at a front end thereof.
